# EUROPEAN PATENT SPECIFICATION

(11) **EP 3 281 341 B1**
(45) Date of publication and mention of the grant of the patent: **06.02.2019**
(21) Application number: 16715900.3
(22) Date of filing: 06.04.2016
(51) Int. Cl.: H04L 5/00, H04W 72/04

(54) **MAPPING OF CONTROL INFORMATION ON CARRIERS IN A WIRELESS COMMUNICAITONS SYSTEM SUPPORTING A PLURALITY OF SERVING CELLS**
ABBILDUNG VON STEUERINFORMATIONEN AUF TRÄGERFREQUENZEN IN DRAHTLOSEN KOMMUNIKATIONSSYSTEMEN MIT MEHREREN VERSORGUNGSZELLEN
MAPPAGE DES INFORMATIONS DE CONTRÔLE SUR DES PORTEUSES DE FRÉQUENCE DANS UN SYSTÈME DE COMMUNICATION SANS FIL SUPPORTANT PLUSIER CELLULES DE DESSERTE

(30) Priority: 10.04.2015 US 201562145792 P
(43) Date of publication of application: 14.02.2018
(73) Proprietor: Telefonaktiebolaget LM Ericsson (publ), 164 83 Stockholm (SE)
(72) Inventor: BELLESCHI, Marco, 171 66 Solna (SE); BERGSTRÖM, Mattias Tan, 120 71 Stockholm (SE); SUNELL, Kai-Erik, 168 73 Bromma (SE)
(74) Representative: Ericsson
(86) International application number: PCT/IB2016/051945
(87) International publication number: WO 2016/162800

(56) References cited:
- EP-A1- 2 849 359
- ERICSSON: "PUCCH on SCell", 3GPP DRAFT; R2-150389 - PUCCH ON SCELL , vol. RAN WG2, no. 89 8 February 2015 (2015-02-08), XP050935676, Athens, Greece Retrieved from the Internet: URL:http://www.3gpp.org/ftp/Meetings_3GPP_ SYNC/RAN2/Docs/ [retrieved on 2015-02-08]

## Description

### TECHNICAL FIELD

The present disclosure relates, in general, to wireless communications and, more particularly, systems and methods for mapping control information on carriers.

### BACKGROUND

Carrier Aggregation (CA) is recognized as one of the key features of a Long-Term Evolution-advanced system. CA increases the available bandwidth and boosts the achievable data rate by aggregating multiple component carriers (CC) that can be non-contiguous and even operating in different bands, i.e. at different frequencies. Even operators possessing a fragmented spectrum can offer an enhanced mobile broadband experience to the end-user both in uplink (UL) and downlink (DL).

CA standardization started in Long-Term Evolution (LTE) Release 10 and continued through later releases. Improvements include an even further increase in the achievable data rate and the extension of CA applications to different scenarios. Currently, it is possible to aggregate up to 5 CCs of different bandwidths. For example, it is now possible to aggregate the 1.4 MHz, 3 MHz, 5 MHz, 10 MHz, 15 MHz, and 20 MHz bandwidths, pushing the maximum aggregated bandwidth to 100 MHz. As a result, up to 750 Mbs may be delivered. Additionally, CA can be applied to both Time-Division Duplex (TDD) and Frequency-Division Duplex (FDD) transmission schemes. Since Release 12, it is also possible to aggregated TDD and FDD carriers. Moreover, CA can be configured in non-collocated cells, e.g. hetnet deployments, where potentially multiple timing advance groups are needed due to the different propagations conditions of the non-collocated cells.

A CA-capable wireless device can be configured with a primary carrier (PCell) and one or more secondary carriers (SCell), which may be either contiguous or non-contiguous in the spectrum. The PCell and the SCells may operate in the same band or in different bands, depending on the actual wireless device capability. According to 3GPP, some operations are supposed to be handled only by the PCell. One such operation includes transmission of Uplink Control Information (UCI) for the Physical Uplink Control Channel (PUCCH). Other operations that are supposed to be handled by the PCell include Contention Based Random Access (CBRA), Radio Resource Control (RRC) signaling, non-access stratum (NAS) information, and system information broadcasting. As an additional distinction, the PCell is considered always active, while the SCell can be temporarily activated/deactivated via MAC Control Element (MAC CE) commands.

The selection of the PCell is carried out following a normal handover procedure. For example, the selection of the PCell may be triggered by measurement events like Event A3, and signaled to the wireless device via RRC Connection Reconfiguration with MobilityControlInfo piggybacked. Also the selection of the SCell is typically performed on the basis of periodic RSRP measurement reported by the UE that sounds the cell reference signals (CRS) from the different carriers. For instance, if measurements indicate that a certain CC is strong enough that CC is configured via RRC signaling and added to the list of serving cells for a UE.

In addition to the SCell configuration being carried out by the RRC layer, the actual activation/deactivation of a SCell can be performed via MAC CE commands. The possibility of having control of the activation/deactivation routine at MAC layer on a wireless device basis allows to better deal with fast channel variations and varying traffic demands. For instance, the eNB may steer the DL/UL traffic in multiple serving cells in a dynamic fashion according to some specific rules relating to, for example, DL/UL traffic demands, channel quality, and/or load balancing policies.

Moreover, the introduction of CA has the side effect of increasing battery power consumption by the wireless device since the wireless device needs to monitor multiple DL carriers in parallel while also multiplexing transmissions over multiple UL carriers. This problem might become even more severe in case of inter-band carrier aggregation where CCs are not located within the same operating frequency band and the wireless device is required to execute multiple receiver/transmitter chains simultaneously. For this reason, the activation/deactivation of the SCells should be performed in a dynamic way to better meet wireless device-requirements in terms of battery consumption. As a result, a trade-off between energy saving and throughput boosting is supposed to be better fulfilled if the MAC layer dictates the SCell activation/deactivation since it offers higher flexibility and promptness than doing that at RRC layer.

A further extension of legacy CA functionality was proposed in a 3GPP Release 13 work item entitled "LTE Carrier Aggregation Enhancement Beyond 5 Carriers". The objective of this new work item is to increase the amount of supported CCs (up to 32 CCs) to give additional flexibility to the CA settings. Considering also the introduction of Licensed Assisted Access (LAA) in Release 13, it will be possible to aggregate licensed and unlicensed CCs to fully exploit the available operator's spectrum.

The possibility of aggregating an even higher number of CCs for the same wireless device also calls for a new standardization effort in the area of Layer-1/Layer-2 (L1/L2) control signaling transmission scheme. Whereas typical L1/L2 control signaling on PUCCH (i.e. HARQ feedbacks, CQI/PMI/RI, SR) can only be sent in the PCell, this new "beyond 5 carries" CA feature implies a significant increase in the load of the PCell, which would need to accommodate PUCCH resources for a large amount of CCs with possible consequences on the overall quality of PUCCH decoding capabilities.

A 3GPP submission by Ericsson ("PUCCH on SCell", R2-150389) discusses the possibility of supporting uplink L1/L2 control signaling in SCells. A selected number of SCells may therefore be configured for PUCCH transmission. The control signaling information conveyed in one such SCell may be related to a set of other SCells that is configured by the network via RRC signaling.

### SUMMARY

To address the foregoing problems with existing solutions, solutions, as provided in the appended independent claims and further detailed in the appended dependent claims, for mapping control information on carriers are disclosed.

According to certain embodiments, a method by a wireless device is provided for mapping control information on carriers. The wireless device is served by a plurality of serving cells. The plurality of serving cells comprise at least a primary cell and a secondary cell. The method includes the steps of independent claim 1.

According to certain embodiments, a wireless device is provided according to independent claim 7.

According to certain embodiments, a computer program product is provided according to independent claim 13.

Preferred embodiments of the present invention are provided in the dependent claims.

Certain embodiments of the present disclosure may provide one or more technical advantages. For example, certain embodiments may provide a variety of methods for configuring a PUCCH-secondary cell. Another advantage may be that it allows for flexible mapping between which serving cell carries the PUCCH-related signaling for a certain serving cell. Still another advantage may be that a mapping is established with low signaling overhead. For example, certain embodiments may allow for a change of which PUCCH carries the PUCCH-related signaling for a serving cell depending on the current situation in the wireless device. Some embodiments, for example, may provide for the activation and/or deactivation of a backup PUCCH to be used in case of a failure of a primary PUCCH..

Other advantages may be readily apparent to one having skill in the art. Certain embodiments may have none, some, or all of the recited advantages. The present invention is defined by the appended claims and limited only by their scope. Embodiment(s) referred to in this description and not fully falling within the scope of said appended claims is (are) example(s) useful for understanding the present invention.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an exemplary network for mapping control information on carriers, in accordance with certain embodiments;
FIGURE 2 illustrates an exemplary wireless device for mapping control information on carriers, in accordance with certain embodiments;
FIGURE 3 illustrates a possible configuration of PUCCH on secondary cells, in accordance with certain embodiments;
FIGURE 4 illustrates a reconfiguration scheme of PUCCH resources on PUCCH secondary cells, according to certain embodiments.
FIGURE 5 illustrates an exemplary method by a wireless device for mapping control information on carriers, in accordance with certain embodiments;
FIGURE 6 illustrates an example computer networking virtual apparatus for mapping control information on carriers, according to certain embodiments;
FIGURE 7 illustrate an example network node for mapping control information on carriers, according to certain embodiments; and
FIGURE 8 illustrates an exemplary radio network controller or core network node, in accordance with certain embodiments.

### DETAILED DESCRIPTION

Recent proposals have considered the possibility of not limiting the Physical Uplink Control Channel (PUCCH) transmissions to the primary cell (PCell), as is currently required in Release 12. Thus, PUCCH resources for PUCCH-related signaling are provided for one or more secondary cells (SCells), which may be referred to herein as PUCCH-SCells. However, enabling the provision of PUCCH resources on SCells requires signaling to configure the PUCCH-SCell and the serving cells that should be mapped to the PUCCH-SCell.

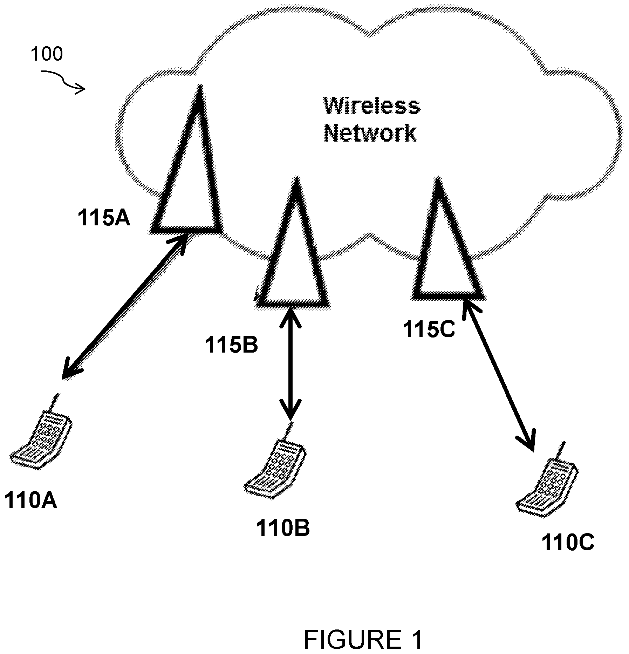

Particular embodiments of the present disclosure may provide solutions enabling the mapping control information on carriers by a wireless device. Certain embodiments may include functionality for mapping of one or more serving cells to a certain PUCCH-SCell. Particular embodiments are described in FIGURES 1-8 of the drawings, like numerals being used for like and corresponding parts of the various drawings. FIGURE 1 is a block diagram illustrating an embodiment of a network 100 for mapping control information on carriers, in accordance with certain embodiments. Network 100 includes one or more wireless devices 110A-C, which may be interchangeably referred to as wireless devices 110 or UEs 110, and network nodes 115A-C, which may be interchangeably referred to as network nodes 115 or eNodeBs 115. A wireless device 110 may communicate with network nodes 115 over a wireless interface. For example, wireless device 110A may transmit wireless signals to one or more of network nodes 115, and/or receive wireless signals from one or more of network nodes 115. The wireless signals may contain voice traffic, data traffic, control signals, and/or any other suitable information. In some embodiments, an area of wireless signal coverage associated with a network node 115 may be referred to as a cell. In some embodiments, wireless devices 110 may have D2D capability. Thus, wireless devices 110 may be able to receive signals from and/or transmit signals directly to another wireless device 110. For example, wireless device 110A may be able to receive signals from and/or transmit signals to wireless device 110B.

In certain embodiments, network nodes 115 may interface with a radio network controller (not depicted in FIGURE 1). The radio network controller may control network nodes 115 and may provide certain radio resource management functions, mobility management functions, and/or other suitable functions. In certain embodiments, the functions of the radio network controller may be included in network node 115. The radio network controller may interface with a core network node. In certain embodiments, the radio network controller may interface with the core network node via an interconnecting network. The interconnecting network may refer to any interconnecting system capable of transmitting audio, video, signals, data, messages, or any combination of the preceding. The interconnecting network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node may manage the establishment of communication sessions and various other functionalities for wireless devices 110. Wireless devices 110 may exchange certain signals with the core network node using the non-access stratum layer. In non-access stratum signaling, signals between wireless devices 110 and the core network node may be transparently passed through the radio access network. In certain embodiments, network nodes 115 may interface with one or more network nodes over an internode interface. For example, network nodes 115A and 115B may interface over an X2 interface.

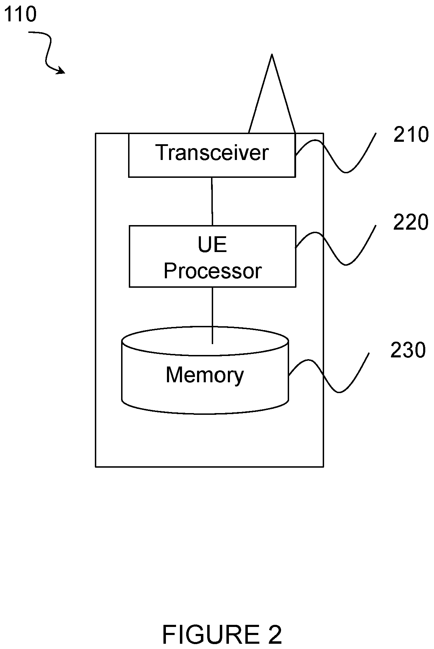

As described above, example embodiments of network 100 may include one or more wireless devices 110, and one or more different types of network nodes capable of communicating (directly or indirectly) with wireless devices 110. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Also, in some embodiments, generic terminology, "radio network node" (or simply "network node") is used. It can be any kind of network node, which may comprise a Node B, base station (BS), multi-standard radio (MSR) radio node such as MSR BS, eNode B, network controller, radio network controller (RNC), base station controller (BSC), relay donor node controlling relay, base transceiver station (BTS), access point (AP), transmission points, transmission nodes, RRU, RRH, nodes in distributed antenna system (DAS), core network node (e.g. MSC, MME etc.), O&M, OSS, SON, positioning node (e.g. E-SMLC), MDT, or any suitable network node. Example embodiments of network nodes 115, wireless devices 110, and other network nodes (such as radio network controller or core network node) are described in more detail with respect to FIGURES 2, 7, and 8, respectively.

Although FIGURE 1 illustrates a particular arrangement of network 100, the present disclosure contemplates that the various embodiments described herein may be applied to a variety of networks having any suitable configuration. For example, network 100 may include any suitable number of wireless devices 110 and network nodes 115, as well as any additional elements suitable to support communication between wireless devices or between a wireless device and another communication device (such as a landline telephone). Furthermore, although certain embodiments may be described as implemented in a long term evolution (LTE) network, the embodiments may be implemented in any appropriate type of telecommunication system supporting any suitable communication standards and using any suitable components, and are applicable to any radio access technology (RAT) or multi-RAT systems in which the wireless device receives and/or transmits signals (e.g., data). For example, the various embodiments described herein may be applicable to LTE, LTE-Advanced, LTE-U UMTS, HSPA, GSM, cdma2000, WiMax, WiFi, another suitable radio access technology, or any suitable combination of one or more radio access technologies. Although certain embodiments may be described in the context of wireless transmissions in the downlink, the present disclosure contemplates that the various embodiments are equally applicable in the uplink and vice versa.

FIGURE 2 illustrates an example wireless device 110 for mapping control information on carriers, in accordance with certain embodiments. As depicted, wireless device 110 includes transceiver 210, processor 220, and memory 230. In some embodiments, transceiver 210 facilitates transmitting wireless signals to and receiving wireless signals from network node 115 (e.g., via an antenna), processor 220 executes instructions to provide some or all of the functionality described above as being provided by wireless device 110, and memory 230 stores the instructions executed by processor 220. Examples of a network node 115 are provided above.

Processor 220 may include any suitable combination of hardware and software implemented in one or more modules to execute instructions and manipulate data to perform some or all of the described functions of wireless device 110. In some embodiments, processor 220 may include, for example, one or more computers, one or more central processing units (CPUs), one or more microprocessors, one or more applications, and/or other logic.

Memory 230 is generally operable to store instructions, such as a computer program, software, an application including one or more of logic, rules, algorithms, code, tables, etc. and/or other instructions capable of being executed by a processor. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Other embodiments of wireless device 110 may include additional components beyond those shown in FIGURE 2 that may be responsible for providing certain aspects of the wireless device's functionality, including any of the functionality described above and/or any additional functionality (including any functionality necessary to support the solution described above).

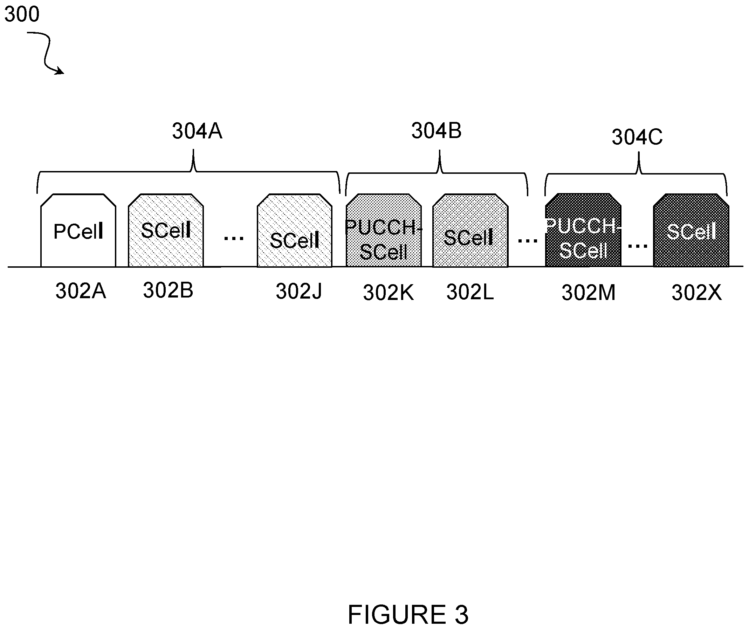

In certain embodiments, a wireless device 110 may be configured with one or more PUCCH channels for PUCCH transmissions. FIGURE 3 illustrates one possible component carrier (CC) configuration for providing PUCCH transmissions on SCells as PUCCH channels, according to certain embodiments. As depicted, the CC configuration includes multiple CCs 302A-X grouped into groups 304A-C. Specifically, CC 302A-J are included in first group 304A, CC 302K-302L are grouped into second group 304B, and CC 302M-X are grouped into a third group 304C. First group 304A includes first CC 302A being configured as the PCell and CCs 302B-302J being configured as SCells. Second group 304B includes CC 302K as being configured as the PUCCH-SCell and CC 302L as being configured as a SCell. Third group 304C includes CC 302M being configured as the PUCCH-SCell and CC 302X as being configured as an SCell. It is recognized, however, that this is just one example configuration and carrier configuration 300 may include any suitable number of component carriers 302 organized into any suitable number of groups 304.

PUCCH channels such as PUCCH-SCells may be activated and/or deactivated to limit battery consumption of a wireless device 110. For example, the eNB may support activation/deactivation of PUCCH-SCells when PUCCH-related signaling is small or absent in a certain PUCCH group. As will be described in more detail below, this may be done by adding a PUCCH configuration to the SCell configuration. In particular, wireless device 110 may receive mapping information, for a particular serving cell, relating to the configuration of a candidate PUCCH-SCell. For example, wireless device 110 may receive a mapping of serving cells to the candidate PUCCH-SCell. A candidate PUCCH-SCell may include a component carrier to be configured as PUCCH-SCell for a group of SCells. In a particular embodiment, such information may be received in response to a configuration of the candidate PUCCH-SCell with PUCCH resources, which may be implemented via RRC signaling.

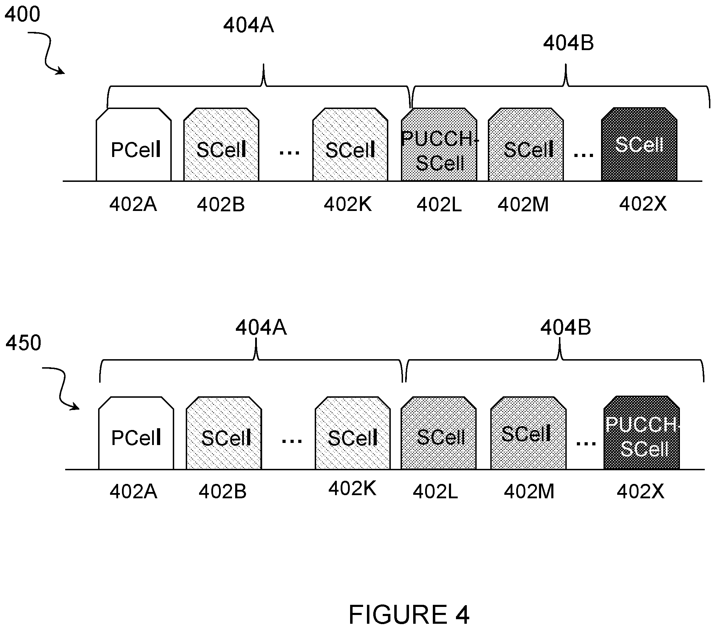

FIGURE 4 illustrates a reconfiguration scheme 400 wherein a CC is identified as a candidate PUCCH-SCell and then reconfigured with PUCCH resources, according to certain embodiments. As depicted, an initial state 440 is similar to the CC configuration discussed above with regard to FIGURE 3, though only two groups are depicted. Specifically, initial state 400 of the CC configuration includes CC 402A-K as being included in first group 404A and CC 402L-X as being grouped in a second group 404B. First group 404A includes first CC 402A being configured as the PCell and CCs 402B-402K being configured as SCells. Second group 404B includes CC 402L as being configured as the PUCCH-SCell and CC 402M-X being configured as SCells. It is recognized, however, that this is just one example configuration and reconfiguration scheme 400 may include any suitable number of component carriers organized into any suitable number of groups.

Though CC 402L is configured as the PUCCH-SCell, CC 402X has been identified as candidate PUCCH-SCell. As such, serving cells that were mapped to CC 402L as the PUCCH-SCell may be remapped to the candidate PUCCH-SCell as shown in modified state 450. A possible application scenario is depicted in FIGURE 4 where a candidate PUCCH-SCell is configured as PUCCH-SCell and the serving cells that were mapped to the old PUCCH-SCell are remapped to the new PUCCH-SCell. In a particular embodiment, the RRC signaling indicates, for each serving cell, which PUCCH-SCell is configured with PUCCH resources for PUCCH transmissions. The term PUCCH transmissions, as used herein, refers to transmissions of signals and messages which are normally sent on PUCCH, such as HARQ-feedback, Channel State Information (CSI) such as Channel Quality Information (CQI)/Precoding Matrix Indicator (PMI)/Rank indicator), and/or Scheduling Requests (SR).

In certain embodiments, the mapping of a PUCCH-SCell can be signaled as an indicator for a serving cell to indicate which PUCCH the uplink control signaling associated with this cell should be sent. In a particular embodiment, the indicator may include a cell index for a particular cell. In such an embodiment, the indication may refer to the PUCCH of the indicated cell.

The signaling solution for providing a mapping of control information on CCs requires one or more lists of PUCCHs and their configurations to be added in the dedicated physical channel configuration information element, such as, for example, an extension addition group. In certain embodiments, the lists define PUCCH configurations. The number of items in a list is limited by the maximum number of cell indices as defined for EUTRA RRC protocol with the constant maxCellMeas. In addition, a mechanism is provided for adding and modifing PUCCHs on the lists. In a particular embodiment, for example, the following fields should be added in the dedicated physical channel configuration information element:

```
[[pucch-List-r13 PUCCH-ToAddModList-r13 OPTIONAL, --Need ON
  pucch-List-r13 PUCCH-ToReleaseList-r13 OPTIONAL, --Need ON
  ]]
```

The modification and addition of PUCCH configurations may require new information element definitions. For example, new information element definitions may include a list of cell indices with the size of maxCellMeas for PUCCH configuration releases. As another example, new information element definitions may include another list that contains the actual PUCCH configurations that are realized. In a particular embodiment, a reference to the PUCCH-ConfigDedicated information element and its extensions may be referred to as -r13 version of the information element:

```
  PUCCH-ToReleaseList-r13 ::= SEQUENCE (SIZE (1..maxCellMeas)) OF Cell Index
  PUCCH-ToAddModList-r13 ::= SEQUENCE (SIZE (1..maxCellMeas)) OF PUCCH-
  ConfigDedicated-r13
```

In certain embodiments, the mapping between cells and PUCCH may require that an indicator be added in the RRC protocol by extending the PhysicalConfigDedicatedSCell-r10 information element. One possible way to extend the information element may be to add an extension addition group that contains an optional protocol field that references cell index information element. To support release and modification of the mapping, a choice construct may be needed for the setup and release of the field in accordance with protocol specification conventions:

```
  PUCCH-Cell-r13::= CHOICE {
     release NULL,
      setup SCellIndex-r10
  } OPTIONAL -- Need ON
```

PUCCH-Cell-r13, as provided here, indicates which PUCCH the uplink control signaling associated with this SCell should be sent. The indicator contains a cell index which refers to the PUCCH of the indicated cell.

In certain other embodiments, another way of signaling the indicator may include first giving each PUCCH an index or identifier. Stated differently, each PUCCH channel may itself be given an index or identifier. Then the indicator per serving cell can be the index or identifier for the PUCCH which the cell should use. This solution may require two lists in the dedicated physical channel configuration information element. The difference compared to the previously described signaling scheme is that a PUCCH identity is used for the mapping instead of a cell index. The extension fields for the list are defined as follows:

```
  pucch-List-r13 PUCCH-ToAddModList-r13 OPTIONAL, --Need ON
  pucch-List-r13 PUCCH-ToReleaseList-r13 OPTIONAL, --Need ON
```

Additionally, the information elements for the list modification and addition make use of PUCCH identify as follows:

```
  PUCCH-ToReleaseList ::= SEQUENCE (SIZE (1..maxPUCCHs)) OF PUCCH-
  Identity-r13
  PUCCH-ToAddModList ::= SEQUENCE (SIZE (1..maxPUCCHs)) OF PUCCH-
  ConfigDedicated-r13
  PUCCH-Identity-r13::= INTEGER (1..maxPUCCHIds)
```

The max PUCCHIds, provided above, may be a constant that limits the maximum number of PUCCHs and thereby also the maximum size of the lists.

In summary, according to certain embodiments described herein, each element in the PUCCH-toAddModList may be a unique PUCCH configuration that is defined by the PUCCH-Identity information element. The PUCCH-identity for each configuration may be added in the PUCCH-ConfigDedicated-r13 information element and the information should otherwise have the same content as legacy PUCCH configurations. As previously described, the PUCCH-ConfigDedicated-r13 information element may composed of the current PUCCH-ConfigDedicated information element and include all extensions so far. This may require upgrade of the PUCCH-ConfigDedicated information element to Release 13 version.

In certain other embodiments, the mapping may include an indication, for a particular PUCCH channel, of any serving cells for which PUCCH-related signaling is to be transmitted on the particular PUCCH channel. Thus, the RRC signaling may indicate for each PUCCH, the serving cells for which PUCCH transmissions should be sent on this PUCCH-SCell. This may be implemented as a set of indicators signaled for a PUCCH. In a particular embodiment, the indicators may include a list or a sequence for a PUCCH, and each indicator may refer to a serving cell for which wireless device shall send uplink control signaling on this PUCCH. The indicators may be cell indices, in a particular embodiment.

In certain other embodiments, the mapping may not include an indication for a particular serving cell. In the absence of such an indication, wireless device 110 may be configured to transmit the PUCCH-related signaling on a default PUCCH channel. For example, wireless device 110 may determine that a mapping between a serving cell and at least one PUCCH channel has not been received. Based on the mapping having not been received, wireless device 110 may determine a particular PUCCH channel on which PUCCH-related signaling is to be transmitted for a particular serving cell. Wireless device 110 may then transmit the PUCCH-related signaling on a default PUCCH channel. Thus, the PUCCH control signaling may, by default, be mapped to the PUCCH-SCell itself. This embodiment may be seen as an optimization of the previously described embodiment where the mapping included an indication for the particular serving cell of the particular PUCCH-SCell by adding yet another choice construct with two entries. The first entry of the new construct may indicate default mapping, and the second entry may indicate cell index. In such a scenario, the field form may be rewritten as follows:

```
  pucch-Cell-r13 CHOICE {
     release NULL,
      setup CHOICE {
            defaultMapping NULL,
            perServingCellMapping SCellIndex-r10 }
  } OPTIONAL --Need ON
```

In certain other embodiments, the mapping between the at least one serving cell and the PUCCH channel may be applicable to a sub-set of the PUCCH-related signaling. In some cases it may be beneficial to map different types of uplink control information towards different serving cells. For example, it may be beneficial to map HARQ transmissions to one cell while mapping CSI feedback towards another cell. Consider the scenario where the UE is configured with one serving cell with PUCCH in licensed spectrum and another serving cell with PUCCH in unlicensed spectrum. The HARQ feedback may be considered more time critical and could therefore be mapped to the serving cell in licensed spectrum since the delay of licensed carriers are expected to be lower. While CSI may be mapped to an unlicensed carrier as it may be considered less time critical and further the CSI is larger compared to the HARQ feedback and hence takes more resources so the network may prefer to map these to an unlicensed carrier to avoid creating overload on licensed carriers.

In certain other embodiments, the mapping may comprise a backup mapping. For example, backup PUCCH resources may be configured for one or more serving cells. Thus, in addition to being mapped to a primary PUCCH channel, a serving cell may also be mapped to one or more backup PUCCH channel. More specifically, a serving cell may be mapped to a primary PUCCH-Scell and one or more backup PUCCH-SCells. The backup PUCCH channels are configured for PUCCH transmissions but are not used for PUCCH transmissions by default. In a particular embodiment, for example, network node 115 may provide wireless device 110 with a list of possible backup PUCCH channels for at least one serving cell. Where multiple backup PUCCH channels are provided, the backup PUCCH channels may be listed in priority order. In a particular embodiment, the priority order of backup PUCCH channels may be set statically by the operator during cell planning on the basis of cell radio propagation conditions. The priority order may be selected to ensure a fair sharing of cell resources between wireless devices 110.

Where, for example, the primary PUCCH channel becomes unavailable for a particular serving cell mapped to it, PUCCH transmissions for the serving cell can be moved to the backup PUCCH resource without impacting network performance. Thus, where the PUCCH channel becomes unavailable due to expiration or a stopping of the associated alignment timer or where the PUCCH-SCell becomes deactivated, PUCCH transmission may be moved to the backup PUCCH-SCell. Network node 115 may determine that the primary PUCCH channel has become unavailable and deconfigure it.

In certain embodiments, wireless device 110 may select the backup PUCCH channel from the priority-ordered list before starting PUCCH transmissions on the backup PUCCH. The selection may be for a particular serving cell. Additionally, wireless device 110 may ensure that the selected backup PUCCH channel is available prior to the selection. The backup PUCCH channel may be unavailable where it has become inactive and/or the time alignment timer has expired.

In still other certain embodiments, network node 115 may dictate the usage of the PUCCH resources in a PUCCH channel via a dedicated MAC CE command. The dedicated MAC CE command may be used only to activate or deactivate the PUCCH channels for PUCCH-transmissions in that serving cell. Where network node 115 decides to deactivate a PUCCH channel, such as because of a bad radio quality measurement, reduced data rate, or congestion control policies, in general, wireless device 110 may start using the highest priority backup PUCCH channel that is currently active.

In a particular embodiment, for example, a backup PUCCH channel may be used until the backup PUCCH channel is deactivated or deconfigured. Thus, wireless device 110 may use a current configured backup PUCCH channel even if the primary PUCCH channel or a higher priority backup PUCCH channel becomes activated. This may avoid any ping pong effects resulting from moving PUCCH transmissions between different cells.

In another particular embodiment, wireless device 110 may switch back to using the primary PUCCH channel when the primary PUCCH channel is reactivated. Alternatively, wireless device 110 may switch to a higher priority backup-PUCCH channel when the higher priority backup PUCCH channel is reactivated.

An advantage provided by such embodiments may be that network node 115 can avoid sending RRC signaling to reconfigure the PUCCH channels and the corresponding serving cell mapping since RRC signaling requires more processing time both at network node 115 and wireless device 110 and can potentially impact latency. In this way, network node 115 may remain in control of the backup PUCCH resources that are currently used for actual PUCCH transmissions. Therefore, network node 115 can potentially schedule wireless device to use backup PUCCH resources that are currently not used for PUCCH transmissions.

In certain embodiments, a serving cell may be mapped to at least one PUCCH channel in order to receiving the corresponding PUCCH control signaling properly. Additionally, HARQ feedbacks may be mapped to one PUCCH channel (i.e., a first PUCCH-SCell) while CSI reports are mapped to another PUCCH channel (i.e., a second PUCCH-SCell) for a single serving cell. Accordingly, in a particular embodiment, HARQ feedbacks and CSI reports for a serving cell may be mapped to one and only one PUCCH channel (i.e., a common PUCCH-SCell). If no specific PUCCH mapping is received by a wireless device 110, HARQ feedbacks and CSI reports for a serving cell may be mapped onto the PUCCH channel of the PCell. Alternatively, the HARQ feedbacks and CSI of a PUCCH-SCell may be sent on the particular PUCCH-SCell.

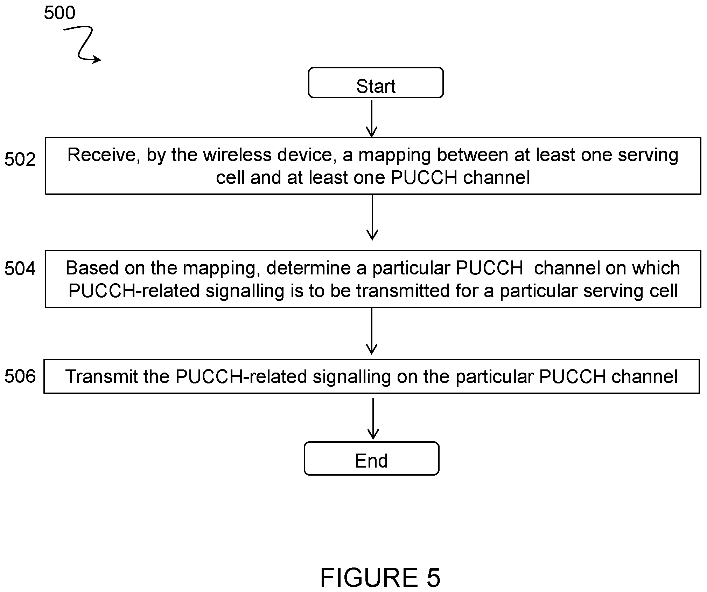

FIGURE 5 illustrates an exemplary method 500 by a wireless device 110 for mapping control information on carriers, in accordance with certain embodiments. The method 500 begins at step 502 when wireless device receives a mapping between at least one serving cell and at least one PUCCH channel.

At step 504, a particular PUCCH channel on which PUCCH-related signaling is to be transmitted for a particular serving cell is determined. In a particular embodiment, the mapping received at step 502 may include an indication for a particular serving cell of the particular PUCCH channel on which the PUCCH-related signaling is to be transmitted. Wireless device 110 may then determine select the particular PUCCH channel for PUCCH related signaling. In other embodiments, the mapping may include an indication for the particular PUCCH channel that identifies any serving cells that should transmit PUCCH-related signaling on the particular PUCCH channel. Wireless device 110 may then select the particular PUCCH channel for the serving cell for PUCCH-related transmissions.

In still other embodiments, the mapping may not include an indication for a particular serving cell or a particular PUCCH channel, and wireless device 110 may select a default PUCCH channel for the PUCCH channel. Additionally, in certain embodiments, the determined PUCCH channel may be selected for only a sub-set of the PUCCH-related signaling. For example, one PUCCH-SCell may be selected for CSI while a second PUCCH-SCell is selected for HARQ feedback.

In still other embodiments, determining the particular PUCCH channel for PUCCH-related signaling may include determining that a first PUCCH channel has become unavailable and selecting a backup PUCCH channel to be used in its place. In still other embodiments, the mapping may include a MAC CE that indicates that a particular PUCCH channel is not to be used by the wireless device. As such, wireless device 110 may determine an alternative cell for selection as a backup PUCCH channel.

At step 506, the PUCCH-related signalling is transmitted on the particular PUCCH channel determined at step 504.

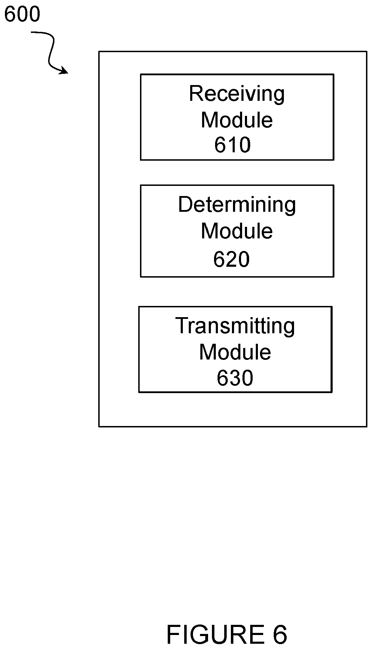

In certain embodiments, the method for mapping control information on carriers as described above may be performed by a computer networking virtual apparatus. FIGURE 6 illustrates an example computer networking virtual apparatus 600 for mapping control information on carriers, according to certain embodiments. In certain embodiments, computer networking virtual apparatus 600 may include modules for performing steps similar to those described above with regard to the method illustrated and described in FIGURE 5. For example, computer networking virtual apparatus 600 may include a receiving module 610, a determining module 620, a transmitting module 630, and any other suitable modules for mapping control information on carriers. In some embodiments, one or more of the modules may be implemented using one or more processors 520 of FIGURE 5. In certain embodiments, the functions of two or more of the various modules may be combined into a single module.

The receiving module 610 may perform the receiving functions of computer networking virtual apparatus 600. For example, receiving module 610 may receive a mapping between at least one serving cell and at least one PUCCH channel.

The determining module 620 may perform the determining functions of computer networking virtual apparatus 600. For example, determining module 620 may determine a particular PUCCH channel on which PUCCH-related signaling is to be transmitted for a particular serving cell. In a particular embodiment, the mapping may include an indication for a particular serving cell of the particular PUCCH channel on which the PUCCH-related signaling is to be transmitted. As such, determining module 620 may determine that the particular PUCCH channel should be used for PUCCH related signaling. In other embodiments, the mapping may include an indication for the particular PUCCH channel that identifies any serving cells that should transmit PUCCH-related signaling on the particular PUCCH channel. Determining module 620 may then determine that the particular PUCCH channel should be used for PUCCH-related transmissions for the serving cell.

The transmitting module 630 may perform the transmitting functions of computer networking virtual apparatus 600. For example, transmitting module 630 may transmit the PUCCH-related signaling on the particular PUCCH channel determined by determining module 620.

Other embodiments of computer networking virtual apparatus 600 may include additional components beyond those shown in FIGURE 6 that may be responsible for providing certain aspects of the wireless device's 110 functionality, including any of the functionality described above and/or any additional functionality (including any functionality necessary to support the solutions described above). The various different types of wireless devices 110 may include components having the same physical hardware but configured (e.g., via programming) to support different radio access technologies, or may represent partly or entirely different physical components.

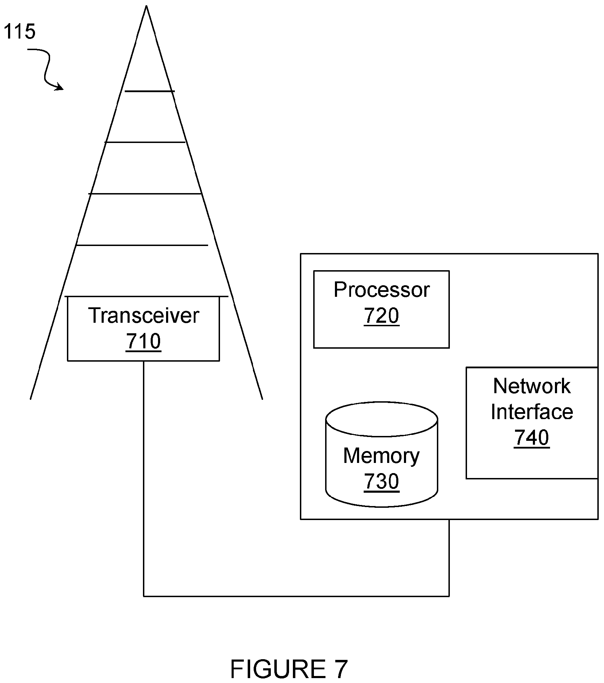

FIGURE 7 illustrate an example network node 115, according to certain embodiments. In addition to supporting the initial configuration of PUCCH resources on secondary cells, network node 115 may support the activation and deactivation of PUCCH channels, as described above.

Network node 115 may be any type of radio network node or any network node that communicates with a wireless device and/or with another network node. Examples of a network node 115 are provided above. Network nodes 115 may be deployed throughout network 100 as a homogenous deployment, heterogeneous deployment, or mixed deployment. A homogeneous deployment may generally describe a deployment made up of the same (or similar) type of network nodes 115 and/or similar coverage and cell sizes and inter-site distances. A heterogeneous deployment may generally describe deployments using a variety of types of network nodes 115 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115 may include one or more of transceiver 710, processor 720, memory 730, and network interface 740. In some embodiments, transceiver 710 facilitates transmitting wireless signals to and receiving wireless signals from wireless device 110 (e.g., via an antenna), processor 720 executes instructions to provide some or all of the functionality described above as being provided by a network node 115, memory 730 stores the instructions executed by processor 720, and network interface 740 communicates signals to backend network components, such as a gateway, switch, router, Internet, Public Switched Telephone Network (PSTN), core network nodes or radio network controllers, etc.

In certain embodiments, network node 115 may be capable of using multi-antenna techniques, and may be equipped with multiple antennas and capable of supporting MIMO techniques. The one or more antennas may have controllable polarization. In other words, each element may have two co-located sub elements with different polarizations (e.g., 90 degree separation as in cross-polarization), so that different sets of beamforming weights will give the emitted wave different polarization.

Processor 720 may include any suitable combination of hardware and software implemented in one or more modules to execute instructions and manipulate data to perform some or all of the described functions of network node 115. In some embodiments, processor 720 may include, for example, one or more computers, one or more central processing units (CPUs), one or more microprocessors, one or more applications, and/or other logic.

Memory 730 is generally operable to store instructions, such as a computer program, software, an application including one or more of logic, rules, algorithms, code, tables, etc. and/or other instructions capable of being executed by a processor. Examples of memory 730 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 740 is communicatively coupled to processor 720 and may refer to any suitable device operable to receive input for network node 115, send output from network node 115, perform suitable processing of the input or output or both, communicate to other devices, or any combination of the preceding. Network interface 740 may include appropriate hardware (e.g., port, modem, network interface card, etc.) and software, including protocol conversion and data processing capabilities, to communicate through a network.

Other embodiments of network node 115 may include additional components beyond those shown in FIGURE 7 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components. Additionally, the terms first and second are provided for example purposes only and may be interchanged.

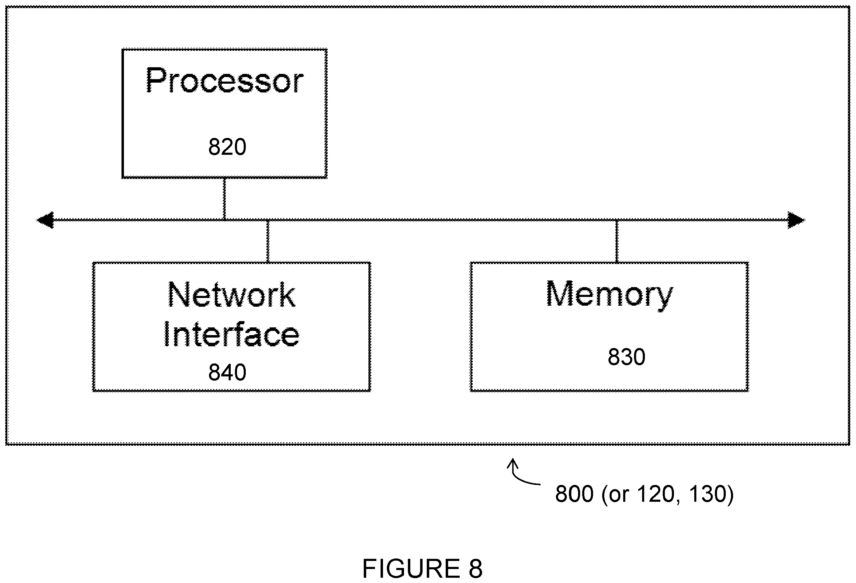

FIGURE 8 illustrates an exemplary radio network controller or core network node, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller or core network node 800 includes processor 820, memory 830, and network interface 840. In some embodiments, processor 820 executes instructions to provide some or all of the functionality described above as being provided by the network node, memory 830 stores the instructions executed by processor 820, and network interface 840 communicates signals to any suitable node, such as a gateway, switch, router, Internet, Public Switched Telephone Network (PSTN), network nodes 115, radio network controllers or core network nodes 800, etc.

Processor 820 may include any suitable combination of hardware and software implemented in one or more modules to execute instructions and manipulate data to perform some or all of the described functions of the radio network controller or core network node 800. In some embodiments, processor 820 may include, for example, one or more computers, one or more central processing units (CPUs), one or more microprocessors, one or more applications, and/or other logic.

Memory 830 is generally operable to store instructions, such as a computer program, software, an application including one or more of logic, rules, algorithms, code, tables, etc. and/or other instructions capable of being executed by a processor. Examples of memory 830 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 840 is communicatively coupled to processor 820 and may refer to any suitable device operable to receive input for the network node, send output from the network node, perform suitable processing of the input or output or both, communicate to other devices, or any combination of the preceding. Network interface 840 may include appropriate hardware (e.g., port, modem, network interface card, etc.) and software, including protocol conversion and data processing capabilities, to communicate through a network.

Other embodiments of the network node may include additional components beyond those shown in FIGURE 8 that may be responsible for providing certain aspects of the network node's functionality, including any of the functionality described above and/or any additional functionality (including any functionality necessary to support the solution described above).

According to certain embodiments, a method by a wireless device is provided for mapping control information on carriers. The method includes receiving, by the wireless device, a mapping between at least one serving cell and at least one PUCCH channel. Based on the mapping, a particular PUCCH channel on which PUCCH-related signalling is to be transmitted for a particular serving cell is determined. The PUCCH-related signalling is transmitted on the particular PUCCH channel.

According to certain embodiments, a wireless device is provided for mapping control information on carriers. The wireless device includes a memory and a processor in communication with the memory. The processor receives a mapping between at least one serving cell and at least one PUCCH channel. The mapping is stored in the memory. Based on the mapping, a particular PUCCH channel on which PUCCH-related signalling is to be transmitted for a particular serving cell is determined. The PUCCH-related signalling is transmitted on the particular PUCCH channel.

According to certain embodiments, logic is provided for mapping control information on carriers. The logic is stored on a non-transitory computer-readable medium. The logic is executed by a processor to cause the processor to receive a mapping between at least one serving cell and at least one PUCCH channel. Based on the mapping, a particular PUCCH channel on which PUCCH-related signalling is to be transmitted for a particular serving cell is determined. The PUCCH-related signalling is transmitted on the particular PUCCH channel.

Certain embodiments of the present disclosure may provide one or more technical advantages. For example, certain embodiments may provide a variety of methods for configuring a PUCCH-secondary cell. Another advantage may be that it allows for flexible mapping between which serving cell carries the PUCCH-related signaling for a certain serving cell. Still another advantage may be that a mapping is established with low signaling overhead. For example, certain embodiments may allow for a change of which PUCCH carries the PUCCH-related signaling for a serving cell depending on the current situation in the wireless device. Some embodiments, for example, may provide for the activation and/or deactivation of a backup PUCCH to be used in case of a failure of a primary PUCCH.Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order. The scope of the present invention is determined only by the scope of the appended claims.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the following claims.

Abbreviations used in the preceding description include:
- ARP: Authentication Retention Priority
- CA: Carrier Aggregation
- CC: Component Carrier
- CQI: Channel Quality Indicator
- eNB: evolved NodeB, base station
- HARQ: Hybrid Automatic Repeat Request
- PDCCH: Physical Downlink Control Channel
- PMI: Precoding Matrix Indicator
- PRB: Physical Resource Block
- PUCCH: Physical Uplink Control Channel
- PUSCH: Physical Uplink Shared Channel
- QCI: QoS Class Identifier
- RI: Rank Indicator
- RRC: Radio Resource Configuration
- RRH: Remote Radio Head
- RSRP: Reference Signal Received Power
- RSRQ: Reference Signal Received Quality
- SR: Scheduling Request
- TAG: Time Alignment Group
- TAT: Time Alignment Timer
- UE: User Equipment

## Claims

1. A method by a wireless device (110) for mapping control information on carriers, the wireless device being served by a plurality of serving cells, the plurality of serving cells comprising at least a primary cell and a secondary cell, the method comprising:
receiving, by the wireless device (110) from a network node (115) via Radio Resource Control, RRC, signalling, a mapping between at least one serving cell of the plurality of serving cells and at least one PUCCH channel provided by the secondary cell;
based on the mapping, determining a particular PUCCH channel provided by the secondary cell on which PUCCH-related signalling is to be transmitted for a particular serving cell (302K) of the plurality of serving cells;
transmitting the PUCCH-related signalling on the particular PUCCH channel (302K);
determining that the particular PUCCH channel on which the PUCCH-related signalling is transmitted for the particular serving cell has become unavailable; and
in response to determining that the particular PUCCH channel has become unavailable, sending, by the wireless device, the PUCCH-related signalling on a backup PUCCH channel provided by the secondary cell and selected from a list of possible backup PUCCH channels that are provided by said secondary cell.

2. The method of Claim 1, wherein the mapping comprises an indication, for the particular serving cell (302K), of the particular PUCCH channel on which the PUCCH-related signalling is to be transmitted.

3. The method of Claim 1, wherein the mapping comprises an indication, for the particular PUCCH channel, of any serving cells for which PUCCH-related signalling is to be transmitted on the particular PUCCH channel.

4. The method of Claim 1, wherein the mapping between the at least one serving cell and the at least one PUCCH channel is applicable to a sub-set of the PUCCH-related signalling.

5. The method of Claim 1, wherein the determining that the particular PUCCH channel is unavailable comprises determining that the particular PUCCH channel is deactivated or that an associated alignment timer has expired or stopped.

6. The method of Claim 1, further comprising:
receiving, by the wireless device (110), a MAC Control Element, MAC CE, from a network node, the MAC CE indicating that the particular PUCCH channel is not to be used by the wireless device (110); and
in response to receiving the MAC CE indicating that the particular PUCCH channel is not to be used, sending the PUCCH-related signalling on an alternative cell, the alternative cell being configured by a Radio Resource Control, RRC, signalling.

7. A wireless device (110) for mapping control information on carriers, the wireless device being served by a plurality of serving cells, the plurality of serving cells comprising at least a primary cell and a secondary cell, the wireless device comprising:
a memory (230); and
a processor (220) in communication with the memory (230), the processor (220) configured to:
receive, from a network node (115) via Radio Resource Control, RRC, signalling, a mapping between at least one serving cell of the plurality of serving cells and at least one PUCCH channel provided by the secondary cell;
store the mapping in the memory (230);
based on the mapping, determine a particular PUCCH channel provided by the secondary cell on which PUCCH-related signalling is to be transmitted for a particular serving cell (302K) of the plurality of serving cells;
transmit the PUCCH-related signalling on the particular PUCCH channel;
determine that the particular PUCCH channel on which the PUCCH-related signalling is transmitted for the serving cell has become unavailable; and
in response to determining that the particular PUCCH channel has become unavailable, transmit the PUCCH-related signalling on a backup PUCCH channel provided by the secondary cell and selected from a list of possible backup PUCCH channels that are provided by said secondary cell.

8. The wireless device (110) of Claim 7, wherein the mapping comprises an indication, for the particular serving cell (302K), of the particular PUCCH channel on which the PUCCH-related signalling is to be transmitted.

9. The wireless device (110) of Claim 7, wherein the mapping comprises an indication, for the particular PUCCH channel, of any serving cells for which PUCCH-related signalling is to be transmitted on the particular PUCCH channel.

10. The wireless device (110) of Claim 7, wherein the mapping between the at least one serving cell and the at least one PUCCH channel is applicable to a sub-set of the PUCCH-related signalling.

11. The wireless device (110) of Claim 7, wherein determining that the particular PUCCH channel is unavailable, by the processor (220), comprises determining that the particular PUCCH channel is deactivated or that an associated alignment timer has expired or stopped.

12. The wireless device (110) of Claim 7, wherein the processor (220) is further operable to:
receive a MAC Control Element, MAC CE, from a network node (115), the MAC CE indicating that the particular PUCCH channel is not to be used by the wireless device; and
in response to receiving the MAC CE indicating that the particular PUCCH channel is not to be used, transmit the PUCCH-related signalling on an alternative cell, the alternative cell being configured by a Radio Resource Control, RRC, signalling.

13. Computer program comprising instructions for implementing a method for mapping control information on carriers, the logic stored on a non-transitory computer-readable medium (230) of a wireless device, the wireless device being served by a plurality of serving cells, the plurality of serving cells comprising at least a primary cell and a secondary cell, the instructions, when executed by a processor (220), cause the processor (220) to:
receive, from a network node (115) via Radio Resource Control, RRC, signalling, a a mapping between at least one serving cell of the plurality of serving cells and at least one PUCCH channel provided by the secondary cell;
based on the mapping, determine a particular PUCCH channel provided by the secondary cell on which PUCCH-related signalling is to be transmitted for a particular serving cell (302K) of the plurality of serving cells;
transmit the PUCCH-related signalling on the particular PUCCH channel;
determine that the particular PUCCH channel on which the PUCCH-related signalling is transmitted for the serving cell has become unavailable; and
in response to determining that the particular PUCCH channel has become unavailable, transmit the PUCCH-related signalling on a backup PUCCH channel provided by the secondary cell and selected from a list of possible backup PUCCH channels that are provided by said secondary cell.

14. The computer program of claim 13, wherein the mapping comprises an indication, for the particular serving cell (302K), of the particular PUCCH channel on which the PUCCH-related signalling is to be transmitted.

15. The computer program of claim 13, wherein the mapping comprises an indication, for the particular PUCCH channel, of any serving cells for which PUCCH-related signalling is to be transmitted on the particular PUCCH channel.

## Patentansprüche

1. Verfahren durch eine drahtlose Vorrichtung (110) zur Zuordnung von Steuerinformationen zu Trägern, wobei die drahtlose Vorrichtung von einer Mehrzahl von versorgenden Zellen versorgt wird, die Mehrzahl von versorgenden Zellen mindestens eine Primärzelle und eine Sekundärzelle umfasst, und das Verfahren umfasst:
Empfangen einer Zuordnung zwischen mindestens einer versorgenden Zelle der Mehrzahl von versorgenden Zellen und mindestens einem PUCCH-Kanal, der von der Sekundärzelle bereitgestellt wird, durch die drahtlose Vorrichtung (110) über Funkressourcensteuerung, RRC,-Signalisierung von einem Netzwerkknoten (115);
Bestimmen basierend auf der Zuordnung eines jeweiligen, von der Sekundärzelle bereitgestellten PUCCH-Kanals, auf dem PUCCH-bezogene Signalisierung gesendet werden soll, für eine jeweilige versorgende Zelle (302K) der Mehrzahl von versorgenden Zellen;
Senden der PUCCH-bezogenen Signalisierung auf dem jeweiligen PUCCH-Kanal (302K);
Bestimmen, dass der jeweilige PUCCH-Kanal, auf dem die PUCCH-bezogene Signalisierung gesendet wird, für die jeweilige versorgende Zelle unverfügbar wurde; und
Senden durch die drahtlose Vorrichtung in Reaktion auf das Bestimmen, dass der jeweilige PUCCH-Kanal unverfügbar wurde, der PUCCH-bezogenen Signalisierung auf einem Ersatz-PUCCH-Kanal, der von der Sekundärzelle bereitgestellt und aus einer Liste von möglichen Ersatz-PUCCH-Kanälen ausgewählt wird, die von der Sekundärzelle bereitgestellt werden.

2. Verfahren nach Anspruch 1, wobei die Zuordnung eine Angabe des jeweiligen PUCCH-Kanals, auf dem die PUCCH-bezogene Signalisierung gesendet werden soll, für die jeweilige versorgende Zelle (302K) umfasst.

3. Verfahren nach Anspruch 1, wobei die Zuordnung eine Angabe jeglicher versorgender Zellen, für welche PUCCH-bezogene Signalisierung auf dem jeweiligen PUCCH-Kanal gesendet werden sollen, für den jeweiligen PUCCH-Kanal umfasst.

4. Verfahren nach Anspruch 1, wobei die Zuordnung zwischen der mindestens einen versorgenden Zelle und dem mindestens einen PUCCH-Kanal auf einen Teilsatz der PUCCH-bezogenen Signalisierung angewendet werden kann.

5. Verfahren nach Anspruch 1, wobei das Bestimmen, dass der jeweilige PUCCH-Kanal unverfügbar ist, ein Bestimmen umfasst, dass der jeweilige PUCCH-Kanal deaktiviert ist oder dass ein assoziierter Synchronisierungszeitgeber abgelaufen ist oder gestoppt wurde.

6. Verfahren nach Anspruch 1, ferner umfassend:
Empfangen eines MAC-Steuerelements, MAC-CE, durch die drahtlose Vorrichtung (110) von einem Netzwerkknoten, wobei das MAC-CE angibt, dass der jeweilige PUCCH-Kanal durch die drahtlose Vorrichtung (110) nicht verwendet werden soll; und
Senden in Reaktion auf den Empfang des MAC-CEs, das angibt, dass der jeweilige PUCCH-Kanal nicht verwendet werden soll, der PUCCH-bezogenen Signalisierung in einer alternativen Zelle, wobei die alternative Zelle durch Funkressourcensteuerungs, RRC,-Signalisierung konfiguriert wird.

7. Drahtlose Vorrichtung (110) zum Zuordnen von Steuerinformationen zu Trägern, wobei die drahtlose Vorrichtung von einer Mehrzahl von versorgenden Zellen versorgt wird, die Mehrzahl von versorgenden Zellen mindestens eine Primärzelle und eine Sekundärzelle umfasst, und die drahtlose Vorrichtung umfasst:
einen Speicher (230); und
einen Prozessor (220) in Kommunikation mit dem Speicher (230), wobei der Prozessor (220) konfiguriert ist zum:
Empfangen einer Zuordnung zwischen mindestens einer versorgenden Zelle der Mehrzahl von versorgenden Zellen und mindestens einem PUCCH-Kanal, der von der Sekundärzelle bereitgestellt wird, von einem Netzwerkknoten (115) über Funkressourcensteuerung, RRC,-Signalisierung;
Speichern der Zuordnung im Speicher (230);
Bestimmen basierend auf der Zuordnung eines jeweiligen, von der Sekundärzelle bereitgestellten PUCCH-Kanals, auf dem PUCCH-bezogene Signalisierung gesendet werden soll, für eine jeweilige versorgende Zelle (302K) der Mehrzahl von versorgenden Zellen;
Senden der PUCCH-bezogenen Signalisierung auf dem jeweiligen PUCCH-Kanal;
Bestimmen, dass der jeweilige PUCCH-Kanal, auf dem die PUCCH-bezogene Signalisierung gesendet wird, für die versorgende Zelle unverfügbar wurde; und
Senden in Reaktion auf das Bestimmen, dass der jeweilige PUCCH-Kanal unverfügbar wurde, der PUCCH-bezogenen Signalisierung auf einem Ersatz-PUCCH-Kanal, der von der Sekundärzelle bereitgestellt und aus einer Liste von möglichen Ersatz-PUCCH-Kanälen ausgewählt wird, die von der Sekundärzelle bereitgestellt werden.

8. Drahtlose Vorrichtung (110) nach Anspruch 7, wobei die Zuordnung eine Angabe des jeweiligen PUCCH-Kanals, auf dem die PUCCH-bezogene Signalisierung gesendet werden soll, für die jeweilige versorgende Zelle (302K) umfasst.

9. Drahtlose Vorrichtung (110) nach Anspruch 7, wobei die Zuordnung eine Angabe jeglicher versorgender Zellen, für welche PUCCH-bezogene Signalisierung auf dem jeweiligen PUCCH-Kanal gesendet werden sollen, für den jeweiligen PUCCH-Kanal umfasst.

10. Drahtlose Vorrichtung (110) nach Anspruch 7, wobei die Zuordnung zwischen der mindestens einen versorgenden Zelle und dem mindestens einen PUCCH-Kanal auf einen Teilsatz der PUCCH-bezogenen Signalisierung angewendet werden kann.

11. Drahtlose Vorrichtung (110) nach Anspruch 7, wobei das Bestimmen durch den Prozessor (220), dass der jeweilige PUCCH-Kanal unverfügbar ist, ein Bestimmen umfasst, dass der jeweilige PUCCH-Kanal deaktiviert ist oder dass ein assoziierter Synchronisierungszeitgeber abgelaufen ist oder gestoppt wurde.

12. Drahtlose Vorrichtung (110) nach Anspruch 7, wobei der Prozessor (220) ferner ausgelegt ist zum:
Empfangen eines MAC-Steuerelements, MAC-CE, von einem Netzwerkknoten (115), wobei das MAC-CE angibt, dass der jeweilige PUCCH-Kanal durch die drahtlose Vorrichtung nicht verwendet werden soll; und
Senden in Reaktion auf den Empfang des MAC-CEs, das angibt, dass der jeweilige PUCCH-Kanal nicht verwendet werden soll, der PUCCH-bezogenen Signalisierung in einer alternativen Zelle, wobei die alternative Zelle durch Funkressourcensteuerungs, RRC,-Signalisierung konfiguriert wird.

13. Computerprogramm, umfassend Anweisungen zum Implementieren eines Verfahrens zur Zuordnung von Steuerinformationen zu Trägern, wobei die Logik auf einem nicht-transitorischen computerlesbaren Medium (230) einer drahtlosen Vorrichtung gespeichert ist, die drahtlose Vorrichtung von einer Mehrzahl von versorgenden Zellen versorgt wird, wobei die Mehrzahl von versorgenden Zellen mindestens eine Primärzelle und eine Sekundärzelle umfasst, und die Anweisungen bei Ausführung durch den Prozessor (220) den Prozessor (220) veranlassen zum:
Empfangen einer Zuordnung zwischen mindestens einer versorgenden Zelle der Mehrzahl von versorgenden Zellen und mindestens einem PUCCH-Kanal, der von der Sekundärzelle bereitgestellt wird, von einem Netzwerkknoten (115) über Funkressourcensteuerung, RRC,-Signalisierung;
Bestimmen basierend auf der Zuordnung eines jeweiligen, von der Sekundärzelle bereitgestellten PUCCH-Kanals, auf dem PUCCH-bezogene Signalisierung gesendet werden soll, für eine jeweilige versorgende Zelle (302K) der Mehrzahl von versorgenden Zellen;
Senden der PUCCH-bezogenen Signalisierung auf dem jeweiligen PUCCH-Kanal;
Bestimmen, dass der jeweilige PUCCH-Kanal, auf dem die PUCCH-bezogene Signalisierung gesendet wird, für die versorgende Zelle unverfügbar wurde; und
Senden in Reaktion auf das Bestimmen, dass der jeweilige PUCCH-Kanal unverfügbar wurde, der PUCCH-bezogenen Signalisierung auf einem Ersatz-PUCCH-Kanal, der von der Sekundärzelle bereitgestellt und aus einer Liste von möglichen Ersatz-PUCCH-Kanälen ausgewählt wird, die von der Sekundärzelle bereitgestellt werden.

14. Computerprogramm nach Anspruch 13, wobei die Zuordnung eine Angabe des jeweiligen PUCCH-Kanals, auf dem die PUCCH-bezogene Signalisierung gesendet werden soll, für die jeweilige versorgende Zelle (302K) umfasst.

15. Computerprogramm nach Anspruch 13, wobei die Zuordnung eine Angabe jeglicher versorgender Zellen, für welche PUCCH-bezogene Signalisierung auf dem jeweiligen PUCCH-Kanal gesendet werden sollen, für den jeweiligen PUCCH-Kanal umfasst.

## Revendications

1. Procédé par un dispositif sans fil (110) permettant la mise en concordance d'informations de commande avec des porteuses, le dispositif sans fil étant desservi par une pluralité de cellules de desserte, la pluralité de cellules de desserte comprenant au moins une cellule primaire et une cellule secondaire, le procédé comprenant :
la réception, par le dispositif sans fil (110) en provenance d'un noeud de réseau (115) par l'intermédiaire d'une signalisation de commande de ressources radio, RRC, d'une concordance entre au moins une cellule de desserte de la pluralité de cellules de desserte et au moins un canal PUCCH fourni par la cellule secondaire ;
sur la base de la concordance, la détermination d'un canal PUCCH particulier fourni par la cellule secondaire sur lequel une signalisation relative au PUCCH doit être transmise pour une cellule de desserte particulière (302K) de la pluralité de cellules de desserte ;
la transmission de la signalisation relative au PUCCH sur le canal PUCCH particulier (302K) ;
la détermination que le canal PUCCH particulier sur lequel la signalisation relative au PUCCH est transmise pour la cellule de desserte particulière est devenu indisponible ; et
en réponse à la détermination que le canal PUCCH particulier est devenu indisponible, l'envoi, par le dispositif sans fil, de la signalisation relative au PUCCH sur un canal PUCCH de sauvegarde fourni par la cellule secondaire et sélectionné dans une liste de canaux PUCCH de sauvegarde possibles qui sont fournis par ladite cellule secondaire.

2. Procédé selon la revendication 1, dans lequel la concordance comprend une indication, pour la cellule de desserte particulière (302K), du canal PUCCH particulier sur lequel la signalisation relative au PUCCH doit être transmise.

3. Procédé selon la revendication 1, dans lequel la concordance comprend une indication, pour le canal PUCCH particulier, des cellules de desserte pour lesquelles une signalisation relative au PUCCH doit être transmise sur le canal PUCCH particulier.

4. Procédé selon la revendication 1, dans lequel la concordance entre l'au moins une cellule de desserte et l'au moins un canal PUCCH est applicable à un sous-ensemble de la signalisation relative au PUCCH.

5. Procédé selon la revendication 1, dans lequel la détermination que le canal PUCCH particulier est indisponible comprend la détermination que le canal PUCCH particulier est désactivé ou qu'une minuterie d'alignement associée a expiré ou est arrêtée.

6. Procédé selon la revendication 1, comprenant en outre :
la réception, par le dispositif sans fil (110), d'un élément de commande MAC, MAC CE, en provenance d'un noeud de réseau, le MAC CE indiquant que le canal PUCCH particulier ne doit pas être utilisé par le dispositif sans fil (110) ; et
en réponse à la réception du MAC CE indiquant que le canal PUCCH particulier ne doit pas être utilisé, l'envoi de la signalisation relative au PUCCH sur une cellule alternative, la cellule alternative étant configurée par une signalisation de commande de ressources radio, RRC.

7. Dispositif sans fil (110) permettant la mise en concordance d'informations de commande avec des porteuses, le dispositif sans fil étant desservi par une pluralité de cellules de desserte, la pluralité de cellules de desserte comprenant au moins une cellule primaire et une cellule secondaire, le dispositif sans fil comprenant :
une mémoire (230) ; et
un processeur (220) en communication avec la mémoire (230), le processeur (220) étant configuré pour effectuer :
la réception, en provenance d'un noeud de réseau (115) par l'intermédiaire d'une signalisation de commande de ressources radio, RRC, d'une concordance entre au moins une cellule de desserte de la pluralité de cellules de desserte et au moins un canal PUCCH fourni par la cellule secondaire ;
la mémorisation de la concordance dans la mémoire (230) ;
sur la base de la concordance, la détermination d'un canal PUCCH particulier fourni par la cellule secondaire sur lequel une signalisation relative au PUCCH doit être transmise pour une cellule de desserte particulière (302K) de la pluralité de cellules de desserte ;
la transmission de la signalisation relative au PUCCH sur le canal PUCCH particulier ;
la détermination que le canal PUCCH particulier sur lequel la signalisation relative au PUCCH est transmise pour la cellule de desserte est devenu indisponible ; et
en réponse à la détermination que le canal PUCCH particulier est devenu indisponible, la transmission de la signalisation relative au PUCCH sur un canal PUCCH de sauvegarde fourni par la cellule secondaire et sélectionné dans une liste de canaux PUCCH de sauvegarde possibles qui sont fournis par ladite cellule secondaire.

8. Dispositif sans fil (110) selon la revendication 7, dans lequel la concordance comprend une indication, pour la cellule de desserte particulière (302K), du canal PUCCH particulier sur lequel la signalisation relative au PUCCH doit être transmise.

9. Dispositif sans fil (110) selon la revendication 7, dans lequel la concordance comprend une indication, pour le canal PUCCH particulier, des cellules de desserte pour lesquelles une signalisation relative au PUCCH doit être transmise sur le canal PUCCH particulier.

10. Dispositif sans fil (110) selon la revendication 7, dans lequel la concordance entre l'au moins une cellule de desserte et l'au moins un canal PUCCH est applicable à un sous-ensemble de la signalisation relative au PUCCH.

11. Dispositif sans fil (110) selon la revendication 7, dans lequel la détermination que le canal PUCCH particulier est indisponible, par le processeur (220), comprend la détermination que le canal PUCCH particulier est désactivé ou qu'une minuterie d'alignement associée a expiré ou est arrêtée.

12. Dispositif sans fil (110) selon la revendication 7, dans lequel le processeur (220) est en outre utilisable pour effectuer :
la réception d'un élément de commande MAC, MAC CE, en provenance d'un noeud de réseau (115), le MAC CE indiquant que le canal PUCCH particulier ne doit pas être utilisé par le dispositif sans fil ; et
en réponse à la réception du MAC CE indiquant que le canal PUCCH particulier ne doit pas être utilisé, la transmission de la signalisation relative au PUCCH sur une cellule alternative, la cellule alternative étant configurée par une signalisation de commande de ressources radio, RRC.

13. Programme informatique comprenant des instructions pour mettre en oeuvre un procédé permettant la mise en concordance d'informations de commande avec des porteuses, la logique mémorisée sur un support lisible par ordinateur non transitoire (230) d'un dispositif sans fil, le dispositif sans fil étant desservi par une pluralité de cellules de desserte, la pluralité de cellules de desserte comprenant au moins une cellule primaire et une cellule secondaire, les instructions, lorsqu'elles sont exécutées par un processeur (220), amènent le processeur (220) à effectuer :
la réception, en provenance d'un noeud de réseau (115) par l'intermédiaire d'une signalisation de commande de ressources radio, RRC, d'une concordance entre au moins une cellule de desserte de la pluralité de cellules de desserte et au moins un canal PUCCH fourni par la cellule secondaire ;
sur la base de la concordance, la détermination d'un canal PUCCH particulier fourni par la cellule secondaire sur lequel une signalisation relative au PUCCH doit être transmise pour une cellule de desserte particulière (302K) de la pluralité de cellules de desserte ;
la transmission de la signalisation relative au PUCCH sur le canal PUCCH particulier ;
la détermination que le canal PUCCH particulier sur lequel la signalisation relative au PUCCH est transmise pour la cellule de desserte est devenu indisponible ; et
en réponse à la détermination que le canal PUCCH particulier est devenu indisponible, la transmission de la signalisation relative au PUCCH sur un canal PUCCH de sauvegarde fourni par la cellule secondaire et sélectionné dans une liste de canaux PUCCH de sauvegarde possibles qui sont fournis par ladite cellule secondaire.

14. Programme informatique selon la revendication 13, dans lequel la concordance comprend une indication, pour la cellule de desserte particulière (302K), du canal PUCCH particulier sur lequel la signalisation relative au PUCCH doit être transmise.

15. Programme informatique selon la revendication 13, dans lequel la concordance comprend une indication, pour le canal PUCCH particulier, des cellules de desserte pour lesquelles une signalisation relative au PUCCH doit être transmise sur le canal PUCCH particulier.
